# EUROPEAN PATENT SPECIFICATION

(11) **EP 1 397 756 B1**
(45) Date of publication and mention of the grant of the patent: **15.12.2010**
(21) Application number: 00951711.1
(22) Date of filing: 07.08.2000
(51) Int. Cl.: G06F 17/30

(54) **MUSIC DATABASE SEARCHING**
SUCHEN IN MUSIKDATENBANK
RECHERCHE DANS UNE BASE DE DONNEES DE FICHIERS MUSICAUX

(30) Priority: 07.08.1999 GB 9918611
(43) Date of publication of application: 17.03.2004
(73) Proprietor: Avid Technology Europe Limited, Iver Heath Buckinghamshire SL0 0NH (GB)
(72) Inventor: FINN, Benjamin, James, Cambridge CB1 1DJ (GB); FINN, Jonathan, Humbert, Cambridge CB1 1DJ (GB); WALMSLEY, Paul, Cambridge CB1 1DJ (GB); SMITH, Julian, Cambridge CB1 1DJ (GB)
(74) Representative: Charig, Raymond Julian
(86) International application number: PCT/GB2000/003035
(87) International publication number: WO 2001/011496

(56) References cited:
- DE-A- 19 652 225
- US-A- 5 918 223
- GHIAS A ET AL: "QUERY BY HUMMING MUSICAL INFORMATION RETRIEVAL IN AN AUDIO DATABASE" PROCEEDINGS OF ACM MULTIMEDIA '95 SAN FRANCISCO, NOV. 5 - 9, 1995, NEW YORK, ACM, US, 5 November 1995 (1995-11-05), pages 231-236, XP000599035 ISBN: 0-201-87774-0
- KATAOKA M ET AL: "Music information retrieval system using complex-valued recurrent neural networks" SYSTEMS, MAN, AND CYBERNETICS, 1998. 1998 IEEE INTERNATIONAL CONFERENCE ON SAN DIEGO, CA, USA 11-14 OCT. 1998, NEW YORK, NY, USA,IEEE, US, 11 October 1998 (1998-10-11), pages 4290-4295, XP010311129 ISBN: 0-7803-4778-1
- CHEN J C C ET AL: "Query by rhythm: an approach for song retrieval in music databases" REASEARCH ISSUES IN DATA ENGINEERING, 1998. 'CONTINUOUS-MEDIA DATABASES AND APPLICATIONS'. PROCEEDINGS., EIGHTH INTERNATIONAL WORKSHOP ON ORLANDO, FL, USA 23-24 FEB. 1998, LOS ALAMITOS, CA, USA,IEEE COMPUT. SOC, US, 23 February 1998 (1998-02-23), pages 139-146, XP010268579 ISBN: 0-8186-8389-9

## Description

The present invention relates to search engines and databases, and in particular to search engines adapted to search for particular musical sequences or phrases in a database of recorded or encoded sound files in a computer system.

The invention relates to searching of databases of varying types. The database could be restricted in size, scope and file format such as a publisher's compact disc catalogue. Alternatively, the database search might be extensive in size and scope, may be widely distributed on a network, and may incorporate many different file types. One example would be an internet search.

In many circumstances, it is desirable to be able to search a music database for a specific piece of music, based solely upon knowledge of a portion of a tune or musical sequence from a piece of music. Otherwise, more detailed conventional bibliographical information such as the title of the work, composer, publisher, lyrics etc. must be provided to effect a search, and such details might not always be known to the searcher.

Known problems associated with searching for a piece of music in a database of music files, based only on knowledge of a tune, are many and varied.

Firstly, a suitable input device for providing the known tune as search criteria to a computer system is required. This is difficult, since the input of music to a computer system, via conventional computer input devices (such as keyboards) by unskilled users, is not straightforward.

Secondly, a method of comparing the search criteria with the complex patterns likely to be found in a computer-based music file is difficult because the precise location of the recognisable tune within the complexities of recorded or encoded sound is not known. A variety of file types such as MIDI files, MP3 files, WAV files, sequencer files, scorewriter files or files in other suitable formats must be accommodated.

Throughout the present specification, the expression "music file" will be used to encompass all forms of electronically, magnetically or optically stored computer-readable files which contain a digital representation of music, from which musical pitch data can be extracted. These representations could relate to encoded recorded sound such as in an MP3 file format, or to coded instructions for creating sound such as a MIDI file format.

Throughout the present specification, the expression "tune" will be used to indicate a sequence of note pitches, preferably single notes rather than chords, which can form the basis of search criteria. Throughout the present specification, the expression "melody" will generally be used to refer to sequences of note pitches in portions of a music file to be searched which are likely to be locations where an input search tune will be found, eg. vocal lines, or solo instrumental lines.

In the prior art, it has been suggested that search criteria can be specified by a relatively simple method of providing a sequence of musical contours. These musical contours describe relative pitch transitions and simply indicate whether each successive note is higher, lower or the same as the preceding note. This format lends itself to easy keyboard input by a user simply providing a character string such as "DUDRUDDUUDLTUDUDR" where "D" represents a downward transition, "U" indicates an upward transition and "R" indicates a repetition of the previous note pitch. Such techniques have found some success with specially prepared databases but are limited by their inaccuracy and input of search criteria is still somewhat awkward for the unskilled user. In addition, such techniques are not particularly suited to searching general music files.

Ghias A et al: "Query by humming musical information retrieval in an audio database" proceedings of ACM multimedia '95 San Francisco, Nov. 5-9, 1995, New York, ACM, US, 5 November 1995 (1995-11-05), pages 231-236, XP000599035 ISBN: 0-201-87774-0 discloses a system for querying an audio database by humming along with a scheme for representing the melodic information in a song as relative pitch changes.

DE 196 52 225 (Rieck Harald) discloses a process for automatic identification of melodies.

It is an object of the present invention to provide a method and apparatus for providing musical search criteria as input to a search engine, in a manner which is easy to use by the unskilled or non-expert user.

It is a further object of the present invention to provide a method and apparatus for applying musical search criteria to a database to obtain a match against target music files in a computer storage medium.

It is a further object of the present invention to provide a method and apparatus for structuring music files in a computer system database in order to enable rapid or efficient searching thereof for specified search criteria comprising a tune.

According to one aspect, the present invention provides an apparatus for effecting a search through a database of music files according to claim 1.

According to another aspect, the present invention provides a method for effecting a search through a database of music files according to claim 20.

According to another aspect, the present invention provides a computer program product according to claim 21.

Embodiments of the present invention will now be described by way of example and with reference to the accompanying drawings in which:
Figure 1 shows a schematic diagram of apparatus for conducting a music search in a database, according to an embodiment of the present invention;
Figure 2 shows a flow diagram of a music search method according to one aspect of the present invention;
Figures 3a, 3b and 3c show a pitch contour during three stages of note discretization and Figure 3d shows "snap fitting" ladders for major, chromatic and minor scales;
Figure 4 shows the steps of a note discretization process of the present invention;
Figures 5a and 5b show histograms generated during a segment frequency comparison process of the present invention;
Figures 6a, 6b and 6c show pitch versus time graphs illustrating a graphical comparison process of the present invention; and
Figure 7 shows the steps of a graphical matching process of the present invention.

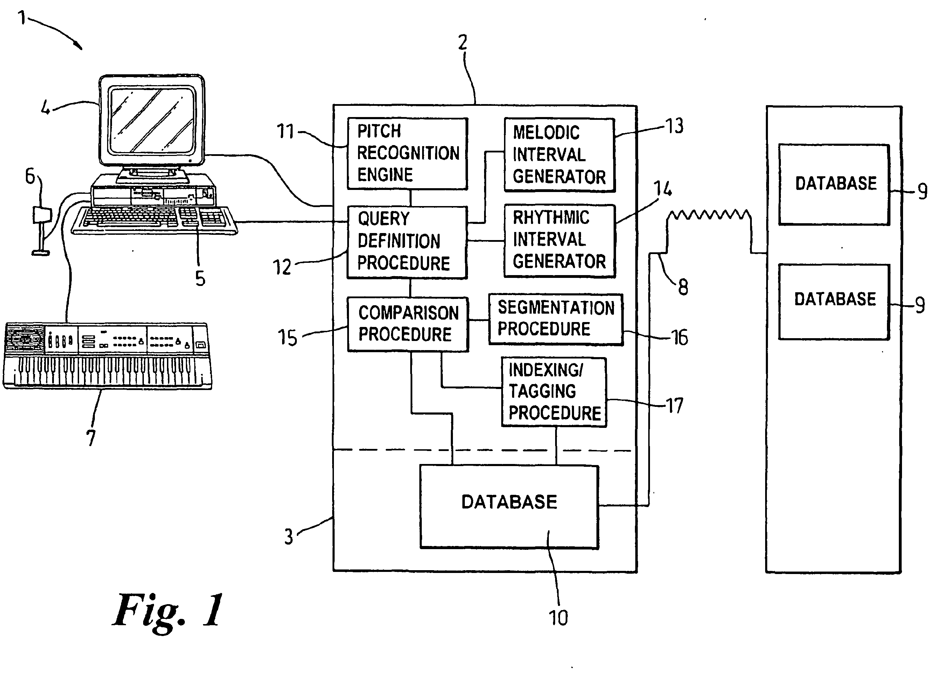

With reference to figure 1 there is shown a computer system I suitable for implementing the music search method of the present invention. Preferably, the computer system comprises conventional hardware in the form of a processor 2, memory 3, monitor 4, keyboard 5 and microphone 6. Preferably, the computer system 1 also includes a MIDI compatible music keyboard 7 and appropriate modem links 8 to external data databases 9.

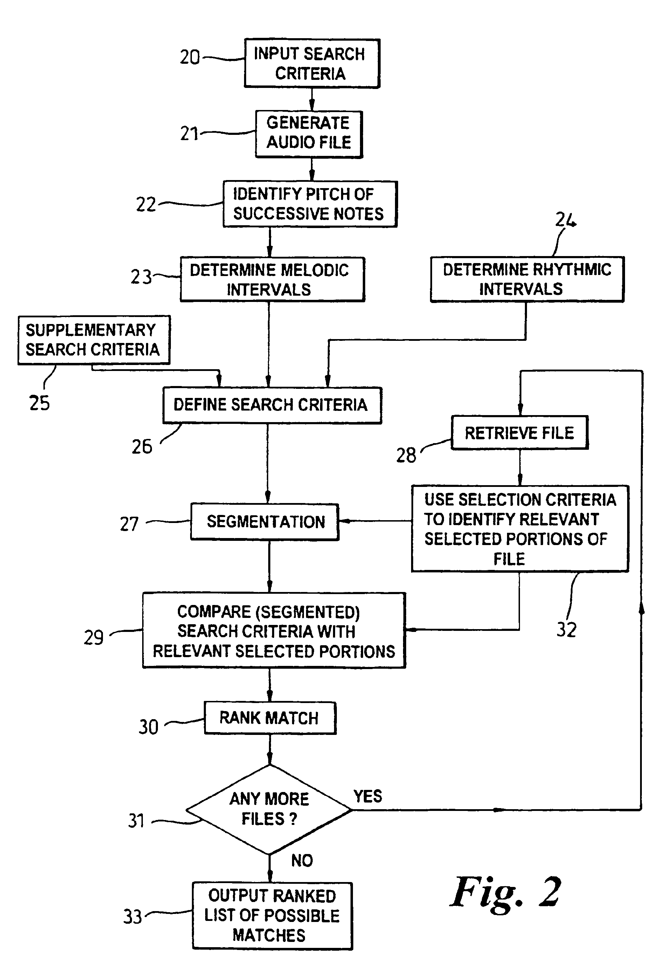

With reference also to figure 2, the search procedure of one embodiment of the invention will now be described in connection with further details of the computer system 1 of figure 1.

### Pitch recognition

A first step 20 is to input search criteria relating to the tune which is being sought. Preferably, this is effected by a user singing, humming or whistling a tune to the computer using microphone 6. In step 21, this audio input is used to generate an audio file. In step 22, a pitch recognition engine 11 in processor 2 is then used to analyse the audio file and identify the pitch, and preferably also the duration, of successive notes in the tune.

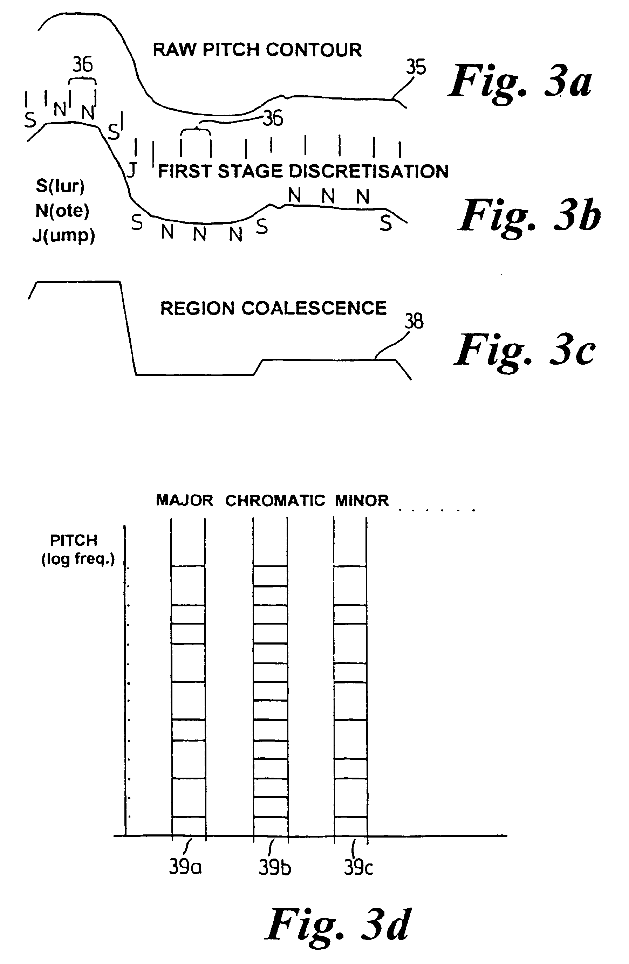

Preferably, the pitch recognition step 22 uses an explicit harmonic model with a parameter estimation stage and, if the input tune is sung or hummed, Bayesian determination of some voice characteristics. Short discontinuities caused by breaks and harmonic artefacts may be filtered out. This produces a continuous, or fairlycontinuous, frequency-time graph 35, as shown in figure 3a and which will be described in greater detail later. A note discretization stage is desirable in order to eliminate problems of tuning and/or slurring, as will also be described hereinafter.

In an alternative embodiment, it will be understood that input of the tune can also be readily achieved using a number of other methods in place of step 21, and usually also step 22. For example, the MIDI keyboard 7 can be used to play the tune directly into a MIDI file. The conventional computer keyboard 5 or a mouse can be used to type in note names (eg. C, E. F etc). A tune may also be selected by a user from a portion of an existing stored music file, eg. MIDI file. A tune may also be selected automatically from a portion of a stored music file, as will be described later. This technique can be useful if a large number of searches are to be made, and could include automatic selection of many parts of a number of music files, if comparison between many files in a database is desired.

### Determination of melodic intervals

Once the succession of note pitches defining the tune to be used as search criteria has been entered into the computer, the next step (figure 2, step 23) is to determine a sequence of melodic intervals from the note pitches. A query definition procedure 12 uses a melodic interval generator 13 to specify the sequence of melodic intervals used in the query.

A melodic interval is defined as the pitch interval between a note and a preceding note. Preferably, the preceding note used is the immediately preceding note although the melodic interval could be defined relative to the first note of a tune or segment of a tune. This latter option is less resilient to the pitch drifting sharp or flat where the tune has been input using audio input, eg. by singing, humming or whistling.

### Quantization of audio input

Preferably, for audio input, the melodic intervals are quantized to reduce pitch errors, analogous to "snap-fitting" graphics lines or points to a grid. (This may also be appropriate for inaccurate input from a MIDI device, or input by other methods, eg. where a user plays a slightly wrong note.) The optimum degree of quantization is best found statistically from a representative set of music files and search tunes, but other quantization strategies used in the present invention include any of the following.

Quantization to half-steps (semitones) is preferably used if the database is reliable and the search tune is specified by a trained musician using MIDI keyboard or other reliable input device.

Quantization to whole-steps (tones) or minor or major thirds if the database or search tune is less reliable, e.g. sung or hummed by an untrained user.

Quantizing to a scale, e.g. diatonic, can be used, if this can be reliably specified in, or deduced from, the music files and/or search tune.

### Note discretization

Input tunes will typically have some notes slurred together, indicated by a curved or angled line on a frequency-time graph. A typical frequency-time graph 35 of aportion of an input tune is shown in figure 3a, where pitch (or frequency) is represented on the y-axis and time is represented on the x-axis. This is referred to as the raw pitch contour. From this raw pitch contour, it may not be clear where one note ends and the next one starts. If slurs are not identified and eliminated before the frequencies are quantized to pitches, then wide slurs will be turned into spurious scales. For example, a rising slur from C to E quantized by semitones would turn into a rapid sequence of notes C, C#, D, D#, E.

The input tune will typically have inaccurate tuning, particularly if it is sung, whistled or hummed. If the tuning is ignored and the frequencies are simply quantized to the closest absolute pitch (for example the closest semitone relative to A = 440Hz), many pitch errors may arise (for example if the input tune's internal tuning is a quarter-tone out from standard 440Hz tuning and fluctuates slightly).

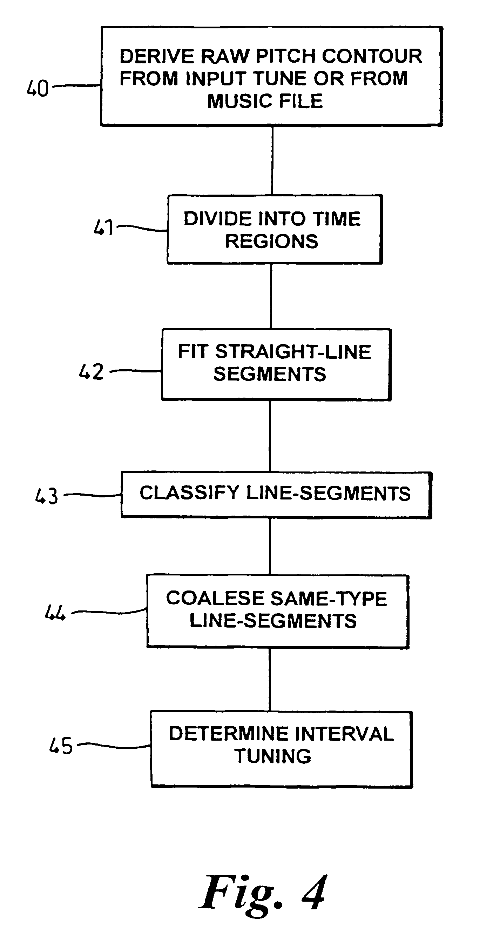

With further reference to figure 3, and also to figure 4, these two problems may be solved in the following way:
1. The frequency-time graph 35 of the raw pitch contour is divided up (step 41) and simplified into continuous notes, slurs and jumps. This may be done in the following manner. The graph 35 is divided into time regions 36, each, for example, about 100 ms in length. A straight line-segment is fitted to each region (step 42). These straight line-segments are classified (step 43) by gradient into horizontal / near-horizontal (continuous notes, "N"), diagonal (slurs, "S") and vertical/near-vertical (jumps, "J") as shown in figure 3b. Some slurs, such as in fast passages, may contain a genuine note which can be identified by a peak in amplitude and replaced by a short continuous note with a slur on either side. Adjacent line-segments which join and which are of the same gradient-type are coalesced (step 44) into single straight line-segments resulting in the discretized frequency time graph 38 shown in figure 3c. Near-horizontal line-segments are made exactly horizontal, as shown.
2. Slurs may then be eliminated by extending the continuous notes on either side so that the graph consists entirely of continuous notes and jumps between them, i.e. a piecewise constant graph. Thus, each diagonal line-segment can be redesignated as a horizontal element having a value equal to an adjacent horizontal line-segment. More preferably, each diagonal line-segment can be split into two parts, each part being given a value equal to its adjacent horizontal line-segment.
3. The internal tuning may then be established (step 45) by finding the mean tuning, typically relative to equal-tempered semitones, of the continuous notes.
4. The frequencies may then be quantized to musical pitches (for example, semitones, tones or diatonic scale steps) with respect to this internal tuning. This can be done by snap fitting the horizontal line-segments of graph 38 to a selected nearest "snap point" as illustrated in figure 3d. The set of snap points to use may be selected from the appropriate "ladder" 39a, 39b, or 39c, corresponding eg. to major, chromatic or minor scales respectively. If quantizing takes place to an uneven ladder, such as a major or minor scale, then the scale (i.e. key and mode) used by the input tune may be identified by generating a histogram of the input tune's frequencies and comparing it with histograms of standard scales or histograms of a large sample of tunes in standard scales. The comparison may be performed using, for example, a normalized least-squares comparison.

### Determination of rhythmic intervals

In a preferred embodiment, not only are melodic intervals used in the search criteria but also, in step 24, the query definition procedure 12 uses a rhythmic interval generator 14 to determine a sequence of rhythmic intervals from the notes in the tune.

Rhythmic intervals are defined as the duration of a note divided by the duration of the preceding note. So a rhythmic interval of 2 denotes a pair of notes of which the second is twice as long as the first. As with melodic intervals, a note's rhythmic interval could be relative to the first note of the tune or to the first note of a segment of a tune, though this would be less resilient to acceleration or deceleration within a tune. Rhythmic intervals may alternatively be defined as the duration of a note divided by the average note-length within the segment, tune or file.

Rhythmic intervals are best used when the search tune is input in a way which accurately records rhythm (eg. singing or MIDI keyboard). Rhythmic intervals are preferably used as second order search criteria, carrying less weight than the melodic intervals, because there is a tendency for them to be much less accurate. This may be because the search tune has only approximate rhythm as input, or because there are often rhythmic variations between different arrangements of music.

### Quantization of rhythmic intervals

Preferably, rhythmic intervals should be coarsely quantized into just a few ranges. These ranges should be statistically chosen such that rhythmic intervals rarely fall near a range boundary. For instance, quantizing rhythmic intervals into 0-1, 1-2 and 2+ would be very poor as many rhythmic intervals will be close to 1 and would be allocated between the first two ranges almost at random.

### Other search criteria

In a preferred embodiment, as shown in step 25, further search criteria can also be specified, in addition to melodic intervals and rhythmic intervals, to further refine a search. For example, the query definition procedure may facilitate input of any or all of the following general bibliographic or text information search criteria if such information will ordinarily be found in, or linked to, the music files to be searched: a) lyrics; (b) title and composer; (c) artist; (d) filename; (e) date of composition - the user may well know this approximately (e.g. decade for pop/rock songs, century for classical music) without knowing the title or composer.

### Comparison procedure

Once all of the search criteria have been specified in the query definition procedure 12 (step 26), a comparison procedure 15 is initiated.

Relevant features in the search criteria are compared with relevant features in each music file in a database 9 or 10. File indexes may be used if available, to be discussed hereinafter.

### Segmentation

Preferably, melodic interval sequences and/or rhythmic interval sequences are segmented (step 27) during the comparison process (step 29) by a segmentation algorithm 16. Each segment may comprise a predetermined number of successive melodic intervals and/or successive rhythmic intervals, or a time period on a pitch-time graph (eg. those of figures 3a-3c). Preferably, the segments would overlap. For example, the first segment may comprise the first to fifth melodic intervals, the second segment will comprise the second to sixth melodic intervals, the third segment will comprise the third to seventh melodic intervals, and so on. The main purpose of segmentation is to provide resilience against there being an extra note in the search tune which is not in the target file, or vice versa. If this discrepancy occurs early on in the search tune, then comparing it on a note-by-note basis with the target file will produce poor matches for all subsequent notes.

However, if the search tune and target music file are divided into segments of a few notes in such a way that an error in a segment will not affect later segments, then a note omitted or added will only affect the score of one segment and will not seriously affect the overall match.

Segments should be a few notes long, preferably 3 to 7 notes. If segments are too short then they will not be distinctive of a particular tune, and false positives will occur by virtue of a different tune containing the same segments (unless a higher score is given for segment order). If segments are too long, then errors in a search tune segment will produce a low score (unless near-matches are scored higher than poor matches).

The ideal segment length and segmenting algorithm can be derived statistically from a representative sample of music files and search tunes.

According to preferred embodiment, segmentation algorithms may include any of the following techniques.
1. Segmentation into variable-length segments based on local context within the tune. For example, a segment boundary could occur at each local maximum or minimum pitch or rhythmic interval. It is important that segmentation depends only on local context, otherwise a note error in the search tune could affect multiple segments and produce too low a score. The algorithm must also avoid producing excessively long or short segments for non-standard kinds of tune.
2. Segmentation into bars or groups of bars, if these can be reliably identified both in the music files and in the search tune and are likely to be the same in both. An example of this is if the music files and search tune are both in the form of music notation, such as with scorewriter files.
3. Segmentation into overlapping, fixed-length segments, typically of 3-7 notes. For example, the sequence of notes A B C D E F could be segmented into the following segments: ABC, BCD, CDE, DEF. This is similar to segmenting into bars but does not require the bar length or bar line position to be identified. A potential disadvantage of this method is that it produces many segments and so is relatively inefficient.

It is possible to produce the same effect as segmentation in another way, but this is relatively inefficient. It would require (i) comparing the search tune with the music file note-by-note, starting at all possible start-points within the music file (if the start of the tune has not been reliably detected in the music file), and (ii) shifting the comparison point forward or backward one or more notes whenever a note-match failed in order to try to get the search tune and music file back in step.

It is noted that the ideal segment length and the best segmenting algorithm may vary according to the type of music being searched. Thus in another embodiment, the query specifies the segmenting algorithm to be used. This may be done directly by the user, or, more preferably, indirectly by the user indicating the type of music being searched for, eg. rock, jazz, country, classical, etc.

In step 28, the comparison procedure systematically retrieves files from the databases 9, 10 and preferably performs the comparison operation (step 29) on the basis of segments of the search criteria tune and segments of the file. The comparison operation may also include other search criteria, such as text, as discussed earlier.

Each music file compared is given a score which is higher for a better match (step 30). Scores may distinguish the closeness of match between segments, or may just assign a singe high score (e.g. 1) for an exact match and a single low score (e.g. 0) for an inexact match or non-match.

Statistics may be used to model likely errors and score inexact matches accordingly. For example, the interval of a tritone is hard to sing correctly, so if it occurs in a music file but does not match the search tune then this may be penalised less than easier intervals which fail to match.

A higher score may also be assigned for an exact or close match between the order of segments (to rule out melodies which have similar groups of notes but in a different order).

A higher score may be assigned if the search tune is found to start at (or near) the start of a relevant selected portion in the music file, as it is likely the search tune is the start of a melody in the search file, rather than the middle or end.

Scores for separate features of a music file may be combined by adding or otherwise.

### Multi-pass comparisons

To increase the speed of searching large databases, there may be one or more coarse comparisons in which some reliable features are compared in order to exclude most of the music files, followed by a more detailed comparison of all features in order to produce a reliable score for each file not already excluded.

### Music file pre-processing

In order to facilitate searching of varying music file types some pre-processing of the music files being searched may be necessary, or may simply be preferable to speed up the matching procedure.

If the music files are audio-based, ie. comprising a representation of recorded sound, a pitch recognition engine similar to that described in connection with the query definition could be used to first determine the notes of possible melodies contained in the music file. These melodies are then compared with the tune of the search criteria, as discussed above.

### Track / channel selection

A music file will typically contain not only melody but also other notes playing simultaneously forming an accompaniment. The melody will typically consist of a tune, typically repeated for two or more verses, and often preceded and/or followed by music other than the tune, e.g. an introduction or coda.

To reduce the amount of music to be searched, it is desirable to select portions of the music file which are more likely to include the tune being searched for, and thereby exclude accompanying instruments and sounds other than the melodies which may contain the tune.

In some music file formats, e.g. MIDI files, sequencer files and scorewriter files, the file is typically divided into separate streams of pitches called tracks, channels or staves. One track, channel or staff typically contains the music for one instrument. The melody is often on the same track, channel or staff throughout the file, or only changes track, channel or staff infrequently within the file.

In other file formats, e.g. WAV files, the file is typically not so divided. However, algorithms can be used to separate out streams of pitches which probably correspond to individual instruments. Once this has been done, streams which may contain the tune can be identified in similar ways as for tracks, channels or staves.

For audio files, this separation of streams can be achieved in various ways. If the audio file is in stereo, then it is likely (particularly in the case of a rock/pop song) that the melody voice or instrument is centred between the two audio channels, whereas accompanying instruments are offset to the left or right to some extent. The fact that the melody voice or instrument is the only one which makes an identical contribution to both channels makes it possible to separate it from the accompaniment. This is achieved by passing the left channel through a filter which reverses the phase of the middle frequencies. This is then subtracted from the right channel. The result enhances middle frequencies which are centred between the channels, i.e. the melody voice or instrument, and reduces other frequencies and sounds which are not centred.

Alternatively or additionally, the methods described earlier for pitch recognition of the input tune may be used to separate out two or more simultaneous notes at any point in the audio file, originating from separate voices or instruments. Successive notes which are of similar timbre and/or pitch and/or which are connected by smooth transitions can then be regarded as continuous streams of pitches on the same instrument. We will refer to these as 'streams' below.

The following criteria can be used for identifying the track, channel, staff or stream containing the melody, or for tracking the melody if it switches between different tracks, channels or staves:
a) If one track/channel/staff/stream has lyrics, it is very likely to be the melody
b) The melody is usually on track 1 in type 1 MIDI files, or the top staff in scorewriter files
c) In MIDI files, the melody is often on channel 1, or if this is silent then on channel 2
d) In MIDI files, the melody is very unlikely to be on channel 10 (unpitched percussion)
e) The melody is usually the highest pitch most of the time, particularly if the highest pitch is on the same channel, track or staff continuously for long stretches of music
f) The melody is very unlikely to contain more than a few melodic intervals greater than an octave
g) If a track, channel, staff or stream is not almost entirely diatonic, it is probably not the melody
h) The track, channel or staff containing the melody probably consists of single notes rather than chords
i) The melody probably has an average note length of between, say, 0.15 and 0.8 seconds (i.e. is probably not extremely fast or slow)
j) The highest note in the melody is probably B above middle C or higher, and the lowest note is probably D a ninth above middle C or lower
k) If the track or staff name or first text item contains 'lead', 'melody', 'vox' or 'vocals', then it is very likely to be the melody
l) If the track or staff name contains 'bass' then it is probably not the melody
m) If a sound used in much or all of the track/channel/staff/stream is strange then it is probably not the melody (e.g. for MIDI files, if the first program change is General MIDI pizzicato, gunshot, timpani or bass guitar, it is probably not the melody)
n) If a channel, track or staff is playing for less than a predetermined percentage of the file's duration, it is probably not the melody. In a preferred embodiment, the predetermined percentage is approximately 70%
o) The melody is probably fairly continuous for several seconds at a time (e.g. it is extremely unlikely to consist of rests punctuated by an occasional isolated note)
p) The melody is probably at least as loud as all other instruments (except unpitched percussion)
q) The melody is unlikely to consist of a short melodic or rhythmic segment exactly repeated many times in succession (such as may occur in accompaniments).

Thus, in a preferred embodiment, a more sophisticated algorithm is possible to first identify relevant portions of the music files which may contain the tune being sought, prior to the comparison step 29 taking place. Preferably, in step 32, a set of selection criteria, exemplified in items a to q above are preferably used to identify relevant selected portions of the music file being searched which are melodies likely to contain search tunes.

The relative scores or weights to allocate to these selection criteria are best determined empirically (e.g. by Bayesian statistics) from a large set of music files representative of those likely to be searched. A score combining most or all of the above criteria would be highly reliable even though the individual criteria are not. The most effective selection criteria to use may vary according to the type of music being analysed. Therefore, the selection criteria may be selected by the user according to the type of music known to be in the file or database being searched, as discussed in relation to the segmentation process. The selection criteria to apply might be determined automatically, particularly if a classification of music type is available in or associated with the file records.

If no one portion of the file scores significantly higher than others according to these criteria, several melodies in the file may need to be identified as relevant selected portions of the file and searched.

If several melodies in the file are identified, probabilities or other weights based on the above criteria indicating how likely each melody is to be the actual search tune could also be stored, and used when scoring matches against the search tune. Scoring criteria could include a weighting factor giving an indication as to how popular the matched melody is. For example, if the melody is a recent pop song, it would be afforded a higher probability of a true match than a piece by an obscure composer. Popularity could be automatically determined on the basis of frequency of hits on the database, eg. number of file accesses or search matches.

Additionally, it may be desirable to identify the point at which each melody (or relevant selected portion) starts, as this is most likely to match the search tune. Criteria for selection of portions of a music file corresponding to the start of melodies which are likely to include a search tune are:
i) If there are lyrics, the start of the lyrics is very likely to be the start of a tune.
ii) The start of the first instance of a passage of reasonable length which is later repeated (i.e. the first of two or more verses) is likely to be the tune.
iii) Failing these, the start of the music in the channel, track, staff or stream which contains a melody is quite likely to be the start of the tune.

It will be understood that the use of the selection criteria indicated above, to identify likely relevant selected portions of music files to be compared against the search criteria, could be done in real time as the search is progressing. However, more preferably, the application of the selection criteria is carried out on the database files prior to searching. A selection procedure provides this function, either in real time during searching, or independently prior to searching.

It will be understood that the relevant selected portions identified by the selection criteria can also be then used as tunes for search criteria, if it is desired, for example, to search a database for any two similar tunes. Such would be useful for looking for potential cases of copyright infringement.

### Indexing

In a preferred embodiment, the database music files are examined by an indexing / tagging procedure 17 to identify relevant selected portions, according to the selection criteria a) - q) and i) - iii) above, before any searching takes place. This information is then provided as an index to the file or as a set of tags to identify positions in the file corresponding to relevant selected portions. The index information may be stored separately from or linked to the respective music file, or as header information thereto, for example.

This indexing, or tagging, of the files is particularly important in very large databases in order to speed up searching of the database.

The indexing process discards irrelevant features (ie. parts which are clearly not melodies) from the music files and thereby reduces the amount of material to be searched. The index entry for a file is hence a much-abbreviated form of the original file.

The first stage of indexing is to identify melodies (ie. candidate tunes) and eliminate any music which is definitely not a melody, e.g. the accompaniment or introduction.

The second stage is to segment the melodies into short groups of notes.

The third stage is to extract relevant features from the melodies, such as melodic intervals. Features other than the melodies can also be indexed to aid matching. For example, these additional features may include: a) lyrics (e.g. in a MIDI file), especially the lyrics at the start of the possible tunes; (b) title and composer (e.g. in a MIDI file); (c) artist; (d) filename, which is often an abbreviation of the music's title, e.g. YELLOW for "Yellow Submarine"; (e) date of composition.

Indexing is preferably carried out automatically but can be partly manual for some applications. For instance, if creating a database of music clips from CDs so that consumers can find CDs in a store, it may be desirable for a human to create a music file corresponding to each CD containing just the first few bars of the melodies of the most important tracks on the CD. These music files form the database which is searched.

Alternatively, tagging files may comprise marking relevant features within an existing file, such as tagging the start of the melodies in a MIDI file. Tagging may also include specifying the time signature and bar line positions to assist segmentation during the comparison procedure.

Index files can be in any suitable format. However, if an index is in a suitable text format then matching can be done by a normal text search engine, provided the search criteria are encoded similarly.

In the case of recorded sound files which are being searched, it will be understood that the process for identifying relevant selected portions of music files, either for searching, indexing or tagging, may also need to be preceded by quantization processes as discussed earlier in connection with the determination of the tune to be used as search criteria.

A single web page or text file can be generated as the index entry for a music file. Melodic intervals and rhythmic intervals can be encoded as letters and divided into space-separated 'words' representing segments. For Internet-wide searches, it may be desirable to design the encoding such that the 'words' formed are unlikely to occur in normal text and produce false matches in normal text pages; e.g. vowels should be excluded from the encoding.

If correct segment order is to be scored more highly than incorrect order, this can be represented by a text phrase search (which requires words to be in the specified order) or a 'nearness' search. Lyrics, title, artist etc. can be included as ordinary text.

### Comparison procedures

A number of other strategies for improving the accuracy of the comparison procedure may be included.

Repeated or tied notes: the search tune and the target music file may differ because the arrangements or lyrics have tied notes in one and repeated notes in the other. It may also be hard to detect repeated notes in audio, especially if there is no intervening consonant. Differences between repeated and tied notes can be eliminated by treating all repeated notes as tied.

Chords: though tracks, channels or staves containing possible tunes probably contain no or few chords, any chords which do occur could be replaced by the top note of the chord.

Rests in mid-tune: these may vary between arrangements (e.g. due to staccato or legato). Rests can be eliminated by regarding a note followed by a rest as ending at the start of the next note (if the next note starts within, say, 1 second).

Pitch bending (e.g. in MIDI files): this can be ignored, but will typically be eliminated by quantization of melodic intervals as discussed earlier.

Octave errors in audio: the difficulty in identifying the octave when performing pitch recognition on audio data can cause notes to be regarded as one or more octaves out. This can be eliminated by transposing all notes to within a single octave range.

### Search output

The computer system 1 may generate the output results from the search in a number of ways. Preferably, in step 30, each music file is awarded a score based on nearness of match of the search criteria with the relevant selected portions of the file. The user will then be presented with a ranked list of the highest scoring files (step 33) together with information about the files from the database (eg. title, artist etc.). With tagging and/or indexing of files, it is also readily possible to include, or link to, a small clip of the music file to play in order that the user can readily verify whether the melody located therein corresponds to the tune in the search query.

There are a large number of applications of the present invention, such as: (a) finding music files on the Internet; (b) finding CDs in music shops and Internet sites; (c) finding music in databases used by rights collecting agencies, advertising agencies, libraries, film/TV companies, etc; (d) comparing music files within a database against each other to find duplicates, different arrangements, or copyright infringement.

Three exemplary applications are given below.
1. In an Internet search engine for MIDI files, a computer has indexed all MIDI files on the Internet using a web crawler. The user plays a search tune on a music keyboard shown on the screen using a mouse. The computer plays the search tune back before searching, to confirm that it has been input as intended. The user also types in a few words of lyrics from the tune, then clicks a 'Search' button. The computer performs a coarse comparison between the search criteria and its index to identify around 500 files which may contain the search tune. The computer performs a finer comparison to assign scores to these files. The computer lists the highest-scoring 20 files by filename. The user can click on any of these filenames to hear the MIDI file and check whether it contains the tune in question. The computer plays from the point in each file where the index or tag indicates the melody or candidate tune begins. The user can then click on a link to jump to the web page which contains the target MIDI file, so that the user can download it.
2. In a search engine for CDs in a music store, for each of the best-selling CDs in a music store, a MIDI file has been generated containing the first few bars of each tune on the CD, and the CD's tracks have been converted into separate MP3 files. A consumer sings a search tune into a microphone on an in-store kiosk. The computer in the kiosk converts this audio data into a stream of note pitches and note durations. The computer matches this against its indexed database of MIDI files. For the highest-scoring file, the computer lists the matching CD's title, artist, price and location, and starts playing the matching track's music from the separate MP3 file. The consumer can press a button to skip to the next-highest scoring match.
3. In a CD changer, each new CD inserted into the magazine is scanned by the system to generate an index file of the tunes present on the CD's in the changer. As discussed above, these index files could be in text or other easily searched format. Then, when a user wishes to access a track of a CD, he or she hums or sings the tune of the desired track. The system then searches the index files and, on locating the right track, instructs the CD changer to load and play the appropriate CD.

### First-pass search algorithms

As discussed above, it may be desirable to perform multi-pass comparisons to speed up searching of large databases. In one embodiment, a first-pass search of all of the database may be carried out to discard at least some files which almost certainly do not contain the input tune or to prioritise those more likely to contain the input tune. Higher-priority files may be searched first in subsequent passes, either (i) in order to present better matches to the user sooner than worse matches, or (ii) so that a subsequent pass can be terminated early if a time limit is reached or if one or more higher-priority files are found to match so well that it is deemed unnecessary to search further. Further details of first pass search strategies will now be given.

Because a first-pass search typically searches the entire database, it is preferable to discard or prioritise files using matching criteria which are fast, and/or suitable for storing in an index as discussed above under "*File pre-processing*", if the database can be pre-processed. Subsequent passes may search fewer files and so may use slower but more reliable matching algorithms.

Matching criteria should be fairly consistent throughout a file and in different versions of the same tune, so that input tunes taken from different parts of the same file or different arrangements of a tune do not affect the criteria. Matching criteria should also be distinctive, so that they divide up a typical database into two or more fairly substantial sets of files.

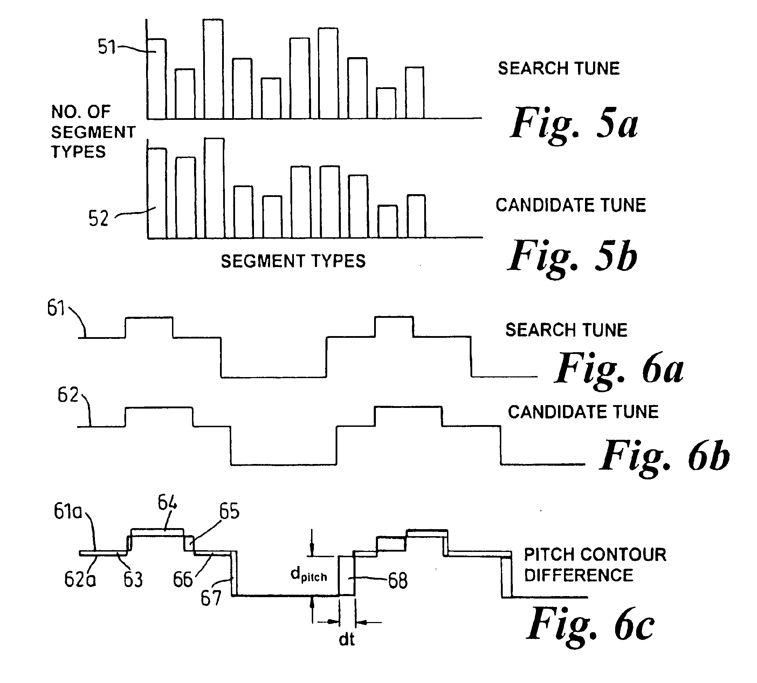

Suitable matching criteria for first or subsequent passes include:
*(i) Occurrence and frequency of segments.*
   In this test, the music is examined as a series of overlapping or non-overlapping segments (as discussed earlier under "*Segmentation* "), and the relative frequency of occurrence of the different segment types is examined. For example, consider a melody note sequence of 100 notes, in the discretized, quantized output of the melodic interval generator 13. If a segment length of 5 notes is used, and an overlap of 4 notes is used, then in this case, the note sequence of 100 notes will have 95 segments to be examined. Of these 95 segments, many will actually be re-occurrences of the same note sequences, ie re-occurrences of a segment type. Supposing that there are 30 different segment types (ie. 30 different combinations of 5-note melodic intervals), each occurrence of each segment type is logged so as to derive a histogram of frequency of each possible segment type in the search tune and in the candidate tune. Two histograms 51, 52 are produced as shown in figure 5a and figure 5b. The segments of the search tune and candidate tune are shown in these histograms. Each type of segment is represented by a vertical bar; the number of occurrences of that segment type within the tune is represented by the height of the bar. The two histograms have fairly similar contours, indicating similar relative frequencies of the various types of segment. The similarity of the histograms can be determined numerically by multiplying the heights of corresponding bars together and summing these products to produce a similarity measure. This is the dot product of the vectors representing each histogram if each segment type represents a dimension of the vector and the bar-height represents the value in that dimension.
   In other words, each possible segment type (eg. note sequence) is treated as a dimension, and each input tune is assigned a vector for which the value in each dimension is the number of times the corresponding segment type occurs in that tune. The vector is then normalized such that the sum of the squares of the values in each dimension is 1. A measure (between 0 and 1) of the similarity of two tunes is then given by the dot product of their vectors. Segment types which occur unusually frequently in a candidate file may be more likely to be accompaniment motifs rather than part of the tune, so it may be desirable to reduce their significance when scoring.
*(ii) The relative frequency of occurrence of each melodic interval in the music.*
   Melodic intervals which occur unusually frequently in a candidate file may be more likely to be accompaniment motifs rather than occurring in the tune, so it may be desirable to reduce their significance when scoring. Note that this broadly corresponds to the situation in *(i)* above where the segment size is just two notes.
*(iii) The key of the music.*
   Research shows that people frequently sing, hum or whistle music in the same key, or a very close key, as the original recording. The key of the input tune and candidate files can be reliably estimated by generating a histogram of the pitch-classes they contain and comparing this (using, for example, a normalized least-squares comparison) with histograms of standard diatonic scales or with relevant sample music data. Because the key may be ambiguous or may possibly vary within a file, a measure of the probability that the music is in one or more particular keys could be used.
(iv) The mode of the music (for example, major or minor). This can be determined in the same way as the key.
(v) The tempo of the tune. This could be measured by the mean note duration in seconds, and perhaps then partitioned into 'fast', 'medium' and 'slow'.
(vi) The pitch variability of the tune. For example, the percentage of notes which are immediately repeated, or the mean absolute value melodic interval could be assessed.

Criteria may be used individually or in combination. For example, if 50% of the files in the database can be excluded on the grounds that they do not contain any of the input tune's segments, it may be possible to exclude a further 50% of the remainder for being in the wrong mode, leaving just 25% for more detailed searching in subsequent passes.

Reliable criteria, such as whether or not the candidate files contain any of the input tune's segments, are suitable for discarding non-matching files from subsequent passes altogether. Less reliable criteria, such as tempo, may be insufficiently reliable for discarding non-matching files, but are suitable for prioritising second and subsequent passes in order to find good matches sooner.

### Graphical comparison techniques

A comparison technique has already been described above which uses the method steps of segmentation (figure 2, step 27) and comparison of segmented search criteria and selected portions of music files (figure 2, step 29). This technique represents a relatively efficient method of performing the comparison operation. An alternative graphical tune comparison procedure will now be described which could be carried out by a suitably modified comparison procedure 15 (figure 1) in processor 2. In the graphical tune comparison procedure, preferably a candidate tune is a relevant selected portion of a music file. Preferably, the graphical comparison is made after the search tune and/or candidate tunes have had their pitch and/or rhythm quantized and/or their notes discretized (as described with reference to figure 2, steps 23 and 24; figures 3 and 4). If rhythm is to be ignored, for the purpose of this comparison method all notes can be given the same duration.

The search tune is conceptually plotted as a graph 61 of pitch against time, such as is shown in figure 6a. Each candidate tune is conceptually plotted in the same way as graph 62 in figure 6b. The search tune graph 61 and each candidate tune graph 62 are then compared in the following way:
1) In turn, various transformations (of which examples are given below) are applied to the graphs 61, 62 to model different deformations that might occur when tunes are sung or arranged in different ways; typically the search tune 61 is transformed and the candidate tune 62 left unchanged, since the search tune is the more likely of the two to contain inaccuracies of pitch or rhythm.
2) For each resulting transformed graph-pair 61, 62, the graphs are superimposed as lines 61 a, 62a in figure 6c). A score is calculated which measures the closeness of fit of the graphs (e.g. the area between the graphs) and/or the transformations which were made to produce them. The score may have a range of values or just two discrete values (representing a 'fits' or 'doesn't fit' response).
3) When various transformations have been tried for the search tune and a single candidate tune, an overall score for the candidate tune is calculated, either from the best score of all the transformed graph-pairs or by combining the scores of well-fitting transformed graph-pairs.
4) When all candidate tunes from all music files have been scored in this way, the highest-scoring candidate tune is treated as the best match for the search tune.

Examples of suitable transformations to a graph as in step 1) above include the following, and any combination thereof:
1a) Identity (no transformation).
1b) Translations in pitch (corresponding to the input and candidate tunes being in different keys). This is achieved by varying the level of the pitch vs. time graph 61.
1c) Translations in time (usually corresponding to the search tune occurring part-way through the candidate tune, e.g. if the candidate tune includes an introduction). This is achieved by systematic leftward or rightward shifting of the pitch vs, time graph 61 relative to the graph 62.
1d) Scaling in time (corresponding to the input and candidate tunes being at different tempi). This is achieved by "stretching" or contracting the x-axis of the graph of figure 6a.
1e) Different time scaling or translation in different parts of the graph (typically corresponding to the search tune drifting in tempo or containing rhythmic errors). This is achieved by a combination of items 1b) and 1d) above.
1f) Different pitch translation in different parts of the graph (typically corresponding to wrong notes or tuning in the input). This is achieved by a translation as in item 1b) above over only part of the graph.
1g) Transformations by removing sections from the graph (corresponding to notes omitted, typically due to search tune errors or different arrangements).

Segmentation is a more efficient method than graphical comparison because it allows tunes to be indexed and removes the need to try out certain transformations such as removing sections from the graph.

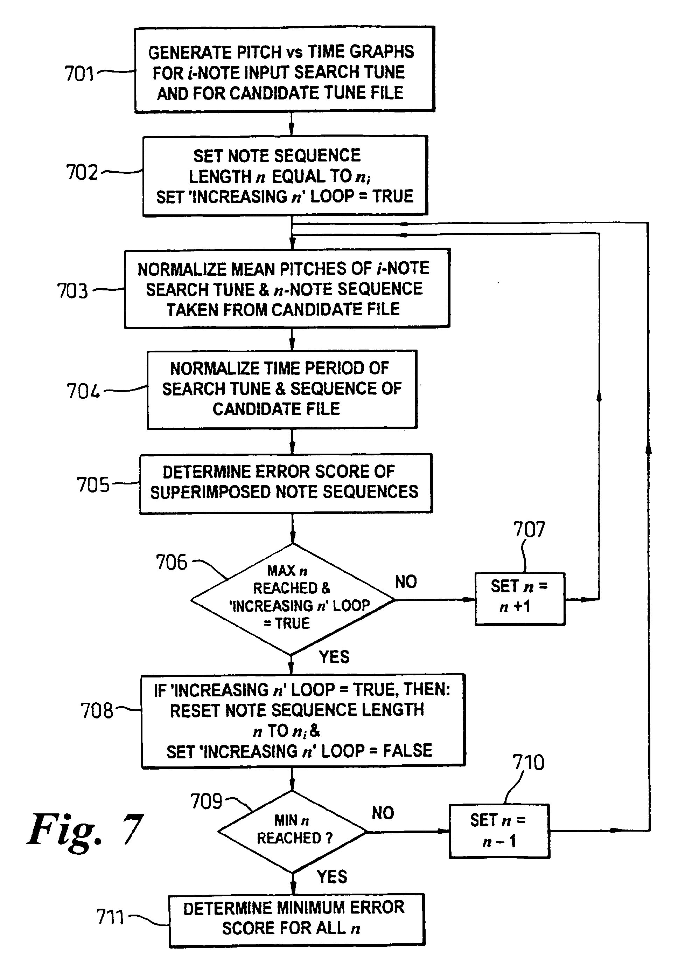

With reference to figure 7, an exemplary graphical matching procedure is described. In this graphical matching procedure, a piecewise constant graph as discussed above under "Note discretization" may be used, as in figures 6a, 6b (step 701). The input tune is compared with all possible *n*-note sequences from each candidate file. To do this, *n* varies around the number of notes *i* in the input tune, thereby allowing for the possibility that the input tune has missing or extra notes. The value of *n* is initially set to *nᵢ* - which could typically be equal to *i* - and an "increasing-n" loop control parameter set to true (step 702). *n* may be given fixed upper and lower limits, typically related to the number of notes in the input tune (e.g. ½*i* to 2*i*), as in steps 706, 709. Within each sequence the pitches are normalized to the mean pitch within the sequence (step 703), and the sequences are stretched in time to the same duration (step 704). The sequences are then superimposed as shown in figure 6c, and scored according to the closeness of match (step 705). In the superimposed graphs, the area between the graphs comprises a plurality of rectangles 63...68 etc. Each rectangle which arises (denoting a difference between the sequences) is assigned the error score *dt.d*pitch², where *dt* is the width of the rectangle and *d*pitch is its height). These error scores added together to produce a total error score for that candidate tune.

Providing that the maximum value of *n* has not yet been reached, and the increasing-*n* loop control is still "true" (step 706), the value of *n* is then incremented (step 707) and the cycle repeated until a maximum value of *n* is processed (step 706). At this point, the exercise is repeated for diminishing *n* by setting the increasing-*n* control loop to "false", resetting *n* to the initial value *nᵢ* (step 708) and determining error scores for diminishing values of *n* (see steps 710, 703-708) until a minimum value of *n* is reached (step 709). The value of *n* for which the minimum error score is determined (step 711) may be regarded as the best fit.

In a faster terminating search, it may be desirable to vary *n* in any direction only until a minimum error score is determined. In this case, the test applied at decision boxes 706 and 708 would be modified to check whether the error score determined in box 705 had increased since the last update of *n*.

Instead of, or in addition to, having upper and lower limits for *n*, if, for a given candidate file, the error score is found to decrease as *n* increases or decreases away from *i*, it may be desirable to try further values for *n* in the same direction even if these exceed the normal upper or lower limit for *n*. When progressing in a given promising direction, *n* may be given 'momentum', i.e. allowed to continue in that direction even if the error increases temporarily. This allows *n* to jump over small humps (local maxima) in the error score in order to reach a significant dip (minimum) which would otherwise be unreachable.

The error score for a given candidate file is the lowest error score of all *n*-note sequences for that file. The best-matching candidate file is the one with the lowest error score.

In a further possible matching algorithm, a determination is made of the changes required to turn input tune into candidate tune. In this technique, the input tune and each candidate tune are listed either as a string of successive melodic intervals or segments. Rhythmic information may be excluded or it may be included in various ways. For example, this may be by interspersing rhythmic interval or other rhythmic data with melodic interval / segment data such as 'C 3 B I D 2'. Alternatively, longer notes may be divided into multiple unit-length notes so that a C of length 3 (previously notated as "C 3") is represented as three Cs of length 1 ("C C C"). Alternatively, segments are used which themselves contain rhythmic information in addition to pitch information.

The input tune and candidate tune are then compared to find the smallest number of changes (melodic interval/segment insertions, deletions and alterations) required to turn one into the other. For example, if A B C D E is compared with B C F E, the former would need to have the A deleted and the D altered to an F to produce the latter. If the input tune is a poorly-sung or mis-remembered version of the candidate tune, these three types of change may represent extra notes, missing notes and wrong notes.

The degree of match is scored using a measure based on these changes. This could simply be the number of changes (1 deletion + I alteration = 2 changes in the above case), or more sophisticated measures may assign different scores to different kinds of change. For example, insertions and deletions of repeated notes could be assigned a small penalty as such changes might arise in different verses of the same song. Alterations by small melodic intervals (e.g. a semitone) could be penalised less than large intervals as they may be caused by poor tuning in the input tune rather than completely wrong notes.

The present invention has been described with reference to certain specific embodiments as depicted in the drawings which are not intended to be in any way limiting. Variations to the embodiments described are within the scope of the appended claims.

## Claims

1. Apparatus (1) for effecting a search through a database of music files, comprising: input means (6, 7), for providing as input search criteria comprising a tune as a sequence of melodic intervals, said input means including quantization means for determining a closest major, minor or other scale to which successive musical pitches will fit;
comparing means (15), for comparing said sequence of melodic intervals with selected portions of a plurality of computer-readable music files; and
output means (14), for providing as output a list of possible matches of said search criteria with ones of said plurality of computer-readable music files.

2. Apparatus according to claim 1 wherein said input means comprises a microphone (6) into which a user can sing, hum or whistle said tune.

3. Apparatus according to claim 1 wherein said input means comprises a MIDI keyboard (7) for playing the tune.

4. Apparatus according to claim 1, claim 2 or claim 3 wherein the input means (6, 7) further includes pitch recognition means for identifying each melodic interval between a succession of musical pitches input as said tune.

5. Apparatus according to any one of claims 1 to 4 wherein said input means (6, 7) further includes quantization means for determining a closest chromatic interval, a closest whole tone interval, or a closest minor or major third interval between two successive musical pitches.

6. Apparatus according to any preceding claim further including means for determining, from said input sequence of melodic intervals, a succession of rhythmic intervals (14) and using said succession of rhythmic intervals as further search criteria.

7. Apparatus according to any preceding claim further including means for providing as input further search criteria comprising text information.

8. Apparatus according to any preceding claim wherein said comparing means (15) includes means for comparing one or more segments of said tune with said selected portions of said plurality of computer-readable music files, and wherein said output means (4) bases the likelihood of a match based on the number of separate segments and/or selected portions for which a possible match is indicated.

9. Apparatus according to claim 8 wherein said segments of the search tune and/or said selected portions of the music file are defined as overlapping note sequences.

10. Apparatus according to any preceding claim wherein said comparing means includes:
means for representing a) the input sequence of melodic intervals, and b) the selected portions of said plurality of computer-readable music files, each as a function of pitch against time, and
means for measuring a closeness of fit of said representations a) and b) to determine a degree of matching of the input sequence and each one of the selected portions.

11. Apparatus according to claim 10 further including transformation means for applying at least one transformation function to at least one of the functions a) and b) prior to measuring a closeness of fit.

12. Apparatus according to claim 11 wherein said at least one transformation function comprises any one of: a translation in pitch; a translation in time; a scaling in time; a variable scaling in time over different parts of the graph; a variable pitch translation over different parts of the graph; and a transformation by removal of selected sections from the graph.

13. Apparatus according to claim 10 wherein said means for measuring closeness of fit comprises means for determining an error score for an *i*-note input sequence compared against an *n*-note selected portion of said music file for each of a plurality of values of *n*.

14. Apparatus according to claim 13 further including means for determining a value of *n* for which the error score is minimized.

15. Apparatus according to claim 14 further including means for varying *n* about a start value until an error score minimum is attained.

16. Apparatus according to any preceding claim wherein said comparing means (15) includes means to identify relevant selected portions of a plurality of computer-readable music files by applying selection criteria to identify portions of the files likely to contain tunes.

17. Apparatus according to claim 16 wherein said relevant selected portions of said music files are stored in an index.

18. Apparatus according to claim 17 wherein said relevant selected portions stored in said index are encoded as text, said input means further including means for encoding said sequence of melodic intervals as a text string, said comparing means comprising a text search engine.

19. Apparatus according to claim 16 wherein the location, in said computer-readable music files, of said relevant selected portions of said music files are indicated by one or more tags, said comparing means adapted to locate said tags.

20. A method for effecting a search through a database of music files, comprising:
providing as input search criteria comprising a tune as a sequence of melodic intervals by determining a closest major, minor or other scale to which successive musical pitches will fit (20);
comparing said sequence of melodic intervals with selected portions of a plurality of computer-readable music files (29); and
providing as output a list of possible matches of said search criteria with ones of said plurality of computer-readable music files (33).

21. A computer program product, comprising a computer readable medium having thereon computer program code means adapted, when said program is loaded onto a computer, to make the computer execute the procedure of claim 20.

22. Apparatus according to claim 1 wherein said comparing means (15) includes means for comparing a plurality of segments of said tune with a plurality of segments from said plurality of computer-readable music files, means for determining a number of matches of each segment-type, and wherein said output means bases the likelihood of a match based on a comparison of the profile of the number of each segment-type for said tune and for said music files.

23. Apparatus according to claim 10 in which the means for measuring a degree of matching includes means for determining a number of transformation functions required in order to match the representations a) and b).

24. Apparatus according to claim 1 wherein said computer-readable music files and/or said input search criteria comprise audio files.

25. Apparatus according to claim 24 wherein said comparing means (15) further includes means to identify relevant selected portions of said audio files likely to contain tunes by detecting a component of the audio signal which is common to both left and right channels of a stereo pair of channels.

## Patentansprüche

1. Vorrichtung (1) zum Durchführen einer Suche durch eine Datenbank von Musikdateien mit:
einem Eingabemittel (6,7) zum Bereitstellen von Eingabesuchkriterien mit einer Weise als eine Folge von Melodieintervallen, wobei das Eingabemittel ein Quantisierungsmittel zum Bestimmen einer am nächsten kommende Haupt-, Unter oder anderer Tonleiter, zu der die jeweiligen Musikstücke passen;
einem Vergleichermittel (15) zum Vergleichen der Folge von Melodieabschnitten mit ausgewählten Teilen einer Mehrzahl von computerlesbaren Musikdateien, und
einem Ausgabemittel (14) zum Bereitstellen als Ausgabe einer Liste möglicher Treffer der Suchkriterien mit einer oder mehrerer der computerlesbaren Musikdateien.

2. Vorrichtung nach Anspruch 1, bei der das Eingabemittel ein Mikrofon (5) umfasst, in das der Benutzer die Weise singen, summen oder pfeifen kann.

3. Vorrichtung nach Anspruch 1, bei der das Eingabemittel eine MIDI-Tastatur (7) zum Spielen der Weise umfasst.

4. Vorrichtung nach Anspruch 1, Anspruch 2 oder Anspruch 3, bei der das Eingabemittel (6,7) des Weiteren ein Stückerkennungsmittel zum Identifizieren eines jeden Melodieintervalls zwischen einer Folge von Musikstücken, die als die Weise eingegeben sind.

5. Vorrichtung nach einem der Ansprüche 1 bis 4, bei der das Eingabemittel (6,7) des Weiteren ein Quantisierungsmittel zum Bestimmen eines am nächsten kommenden chromatischen Abschnittes, eines insgesamt am nächsten kommenden Klangfarbenabschnittes oder eines am nächsten kommenden kleinen oder großen dritten Intervalls zwischen zwei aufeinanderfolgenden Musikstücken bestimmt.

6. Vorrichtung nach einem der vorangehenden Ansprüche, des Weiteren mit einem Mittel zum Bestimmen aus der Eingabesequenz der Melodieintervalle, einer Folge von rhythmischen Intervalle (14) und zur Verwendung der Folge der rhythmischen Intervalle als weiteres Suchkriterium.

7. Vorrichtung nach einem der vorangehenden Ansprüche, des Weiteren mit einem Mittel zum Bereitstellen als eine Eingabe zu weiteren Suchkriterien mit Textinformation.

8. Vorrichtung nach einem der vorangehenden Ansprüche, bei dem das Vergleichermittel (15) Mittel umfasst, um ein oder mehr Segmente der Weise mit ausgewählten Teilen einer Mehrzahl von computerlesbaren Musikdateien zu vergleichen, und wobei das Ausgabemittel (4) die Wahrscheinlichkeit eines Treffers beruhend auf der Anzahl von getrennten Segmenten und/oder ausgewählten Teilen basiert, für die eine mögliche Übereinstimmung angezeigt wird.

9. Vorrichtung nach Anspruch 8, bei dem die Segmente für die Suche der Weise und/oder die ausgewählten Abschnitte der Musikdatei durch überlappen von Notenfolgen bestimmt werden.

10. Vorrichtung nach einem der vorangehenden Ansprüche, bei der das Vergleichermittel umfasst:
ein Mittel zum Darstellen a) der Eingabesequenz von Melodieintervallen und b) des ausgewählten Teils der Mehrzahl von computerlesbaren Musikdateien, jeweils als eine Funktion des Stücks über der Zeit, und
ein Mittel zum Messen einer Nähe des Fits der Darstellungen a) und b) zum Bestimmen des Ausmaßes einer Übereinstimmung der Eingabesequenz und jedem der ausgewählten Teile.

11. Vorrichtung nach Anspruch 10, des Weiteren mit einem Umwandlungsmittel zum Anwenden zumindest einer der Funktionen a) und b) vor dem Messen der Nähe des Fits.

12. Vorrichtung nach Anspruch 11, bei der die zumindest eine Transformationsfunktion umfasst eine von: eine Translation um ein Stück, eine Translation in der Zeit, eine Skalierung in der Zeit, eine variable Skalierung in der Zeit über verschiedene Teile der Kurve, eine variable Stück-Translation über verschiedene Teile der Kurve und eine Transformation durch Entfernen von ausgewählten Ausschnitten der Kurve.

13. Vorrichtung nach Anspruch 10, bei der das Mittel zum Messen der Nähe des Fits ein Mittel zum Bestimmen einer Fehlerrate für eine i-Noten-Eingabesequenz umfasst, die gegenüber einem n-Noten-Auswahlteil der Musikdatei für jeden der einer Mehrzahl von Werten von Variablen n verglichen wird.

14. Vorrichtung nach Anspruch 13, des Weiteren mit einem Mittel zum Bestimmen eines Wertes von n, für den die Fehlerrate minimiert ist.

15. Vorrichtung nach Anspruch 14, des Weiteren mit einem Mittel zum Variieren von n, um einen Startwert bis eine minimale Fehlerrate erreicht ist.

16. Vorrichtung nach einem der vorangehenden Ansprüche, bei dem das Vergleichermittel (15) ein Mittel zum Identifizieren relevanter ausgewählter Teile einer Mehrzahl von computerlesbaren Musikdateien umfasst, in den Auswahlkriterien zum Identifizieren von Teilen der Musikdateien angewendet werden, die wahrscheinlich Weisen enthalten.

17. Vorrichtung nach Anspruch 16, bei der die relevanten ausgewählten Teile der Musikdateien in einem Index gespeichert sind.

18. Vorrichtung nach Anspruch 17, bei der die relevanten ausgewählten Teile, die in dem Index gespeichert sind, als Text kodiert sind, wobei das Eingabemittel des Weiteren Mittel zum kodieren der Sequenz von Melodieintervallen als eine Textstring umfasst, und wobei das Vergleichsmittel eine Textsuchmaschine umfasst.

19. Vorrichtung nach Anspruch 16, in der der Ort der computerlesbaren Musikdatei des relevanten ausgewählten Teils der Musikdatei durch eine oder mehrere Markierungen bzw. Tags angezeigt wird, wobei das Vergleichermittel ausgestaltet ist, um die Tags zu lokalisieren.

20. Verfahren zum Durchführen einer Suche durch eine Datenbank aus Musikdateien mit:
Bereitstellen von Eingabesuchkriterien mit einer Weise als eine Sequenz von Melodieintervallen durch Bestimmen einer am nächstkommenden Haupt-, Unter- oder anderer Tonleiter, zu der aufeinanderfolgenden Musikstücke passen (20);
Vergleichen der Folge von Melodieintervallen mit ausgewählten Teilen einer Mehrzahl von computerlesbaren Musikdateien (29); und
Bereitstellen als Ausgabe eine Liste möglicher Treffer der Suchkriterien mit einer oder mehrerer der computerlesbarer Musikdateien (33).

21. Computerprogrammprodukt mit einem computerlesbaren Medium, auf dem Computer-Programm-Codemittel sind, die ausgestaltet sind, wenn das Computerprogramm in einen Computer geladen ist, den Computer dazu zu veranlassen, die Prozedur von Anspruch 20, auszuführen.

22. Vorrichtung nach Anspruch 1, bei der das Vergleichermittel (15) umfasst: ein Mittel zum Vergleichen einer Mehrzahl von Segmenten der Weise mit einer Mehrzahl von Segmenten einer Mehrzahl von computerlesbaren Musikdateien, ein Mittel zum Bestimmen einer Anzahl von Treffern von jedem Segment-Typ, und wobei das Ausgabemittel die Wahrscheinlichkeit eines Treffers beruhend auf einem Vergleich des Profils der Nummer des Segment-Typs für die Weise und für die Musikdatei basiert.

23. Vorrichtung nach Anspruch 10, bei der das Mittel zum Messen eines Ausmaßes des Treffens ein Mittel umfasst, um eine Anzahl von Transformationsfunktionen zu Bestimmen, die benötigt werden, um die Darstellung a) und b) zu treffen.

24. Vorrichtung nach Anspruch 1, bei der die computerlesbare Musikdatei und- oder die Eingabesuchkriterien Audiodateien umfassen.

25. Vorrichtung nach Anspruch 24, bei der das Vergleichsmittel des Weiteren ein Mittel umfasst, um relevante ausgewählte Teile der Audiodateien zu identifizieren, für die es wahrscheinlich ist, dass sie Weisen enthalten, indem eine Komponente des Audiosignals umfasst wird, die sowohl dem linken als auch dem rechten Kanal des Stereopaars von Kanälen gemeint ist.

## Revendications

1. Appareil (1) pour effectuer une recherche dans une base de données de fichiers musicaux, comprenant :
des moyens d'entrée (6, 7), pour fournir comme entrée des critères de recherche comprenant un air sous forme de séquence d'intervalles mélodiques, lesdits moyens d'entrée incluant des moyens de quantification pour déterminer une gamme majeure, mineure ou autre la plus proche à laquelle de multiples tons musicaux successifs s'accorderont ;
des moyens de comparaison (15), pour comparer ladite séquence d'intervalles mélodiques avec des portions sélectionnées d'une pluralité de fichiers musicaux lisibles par ordinateur ; et
des moyens de sortie (14), pour fournir comme sortie une liste de concordances possibles desdits critères de recherche avec des éléments de ladite pluralité de fichiers musicaux lisibles par ordinateur.

2. Appareil selon la revendication 1, dans lequel lesdits moyens d'entrée comprennent un microphone (6) dans lequel un utilisateur peut chanter, fredonner ou siffler ledit air.

3. Appareil selon la revendication 1, dans lequel lesdits moyens d'entrée comprennent un clavier MIDI (7) pour jouer l'air.

4. Appareil selon la revendication 1, la revendication 2 ou la revendication 3, dans lequel les moyens d'entrée (6, 7) incluent en outre des moyens de reconnaissance de ton pour identifier chaque intervalle mélodique entre une succession de tons musicaux entrés en guise dudit air.

5. Appareil selon l'une quelconque des revendications 1 à 4, dans lequel lesdits moyens d'entrée (6, 7) incluent en outre des moyens de quantification pour déterminer un intervalle chromatique le plus proche, un intervalle de ton entier le plus proche, ou un troisième intervalle mineur ou majeur le plus proche entre deux tons musicaux successifs.

6. Appareil selon l'une quelconque des revendications précédentes, incluant en outre des moyens pour déterminer, à partir de ladite séquence d'entrée d'intervalles mélodiques, une succession d'intervalles rythmiques (14) et utiliser ladite succession d'intervalles rythmiques comme critères de recherche supplémentaires.

7. Appareil selon l'une quelconque des revendications précédentes, incluant en outre des moyens pour fournir comme entrée des critères de recherche supplémentaires comprenant des informations de texte.

8. Appareil selon l'une quelconque des revendications précédentes, dans lequel lesdits moyens de comparaison (15) incluent des moyens pour comparer un ou plusieurs segments dudit air avec lesdites portions sélectionnées de ladite pluralité de fichiers musicaux lisibles par ordinateur, et dans lequel lesdits moyens de sortie (4) basent la probabilité d'une concordance sur le nombre de segments séparés et/ou de portions sélectionnées pour lesquels une concordance possible est indiquée.

9. Appareil selon la revendication 8, dans lequel lesdits segments de l'air de recherche et/ou lesdites portions sélectionnées du fichier de musique sont définis comme des séquences de note chevauchantes.

10. Appareil selon l'une quelconque des revendications précédentes, dans lequel lesdits moyens de comparaison incluent :
des moyens pour représenter a) la séquence d'entrée d'intervalles mélodiques, et b) les portions sélectionnées de ladite pluralité de fichiers musicaux lisibles par ordinateur, chacune en fonction du ton par rapport au temps, et
des moyens pour mesurer une qualité d'accord desdites représentations a) et b) pour déterminer un degré de concordance de la séquence d'entrée et de chacune des portions sélectionnées.

11. Appareil selon la revendication 10, incluant en outre des moyens de transformation pour appliquer au moins une fonction de transformation à au moins une des fonctions a) et b) avant de mesurer une qualité d'accord.

12. Appareil selon la revendication 11, dans lequel ladite au moins une fonction de transformation comprend un élément quelconque parmi : une translation de ton ; une translation de temps ; une mise à l'échelle dans le temps ; une mise à l'échelle variable dans le temps sur différentes parties du graphe ; une translation de ton variable sur différentes parties du graphe ; et une transformation par élimination de portions sélectionnées du graphe.

13. Appareil selon la revendication 10, dans lequel lesdits moyens pour mesurer la qualité d'accord comprennent des moyens pour déterminer une note d'erreur pour une séquence d'entrée de note i comparée à une portion sélectionnée de note *n* dudit fichier musical pour chacune d'une pluralité de valeurs de *n*.

14. Appareil selon la revendication 13, incluant en outre des moyens pour déterminer une valeur de n pour laquelle la note d'erreur est minimisée.

15. Appareil selon la revendication 14, incluant en outre des moyens pour faire varier *n* autour d'une valeur de départ jusqu'à ce qu'un minimum de note d'erreur soit atteint.

16. Appareil selon l'une quelconque des revendications précédentes, dans lequel lesdits moyens de comparaison (15) incluent des moyens pour identifier des portions sélectionnées pertinentes d'une pluralité de fichiers musicaux lisibles par ordinateur par application de critères de sélection pour identifier des portions des fichiers susceptibles de contenir des airs.

17. Appareil selon la revendication 16, dans lequel lesdites portions sélectionnées pertinentes desdits fichiers musicaux sont stockées dans un index.

18. Appareil selon la revendication 17, dans lequel lesdites portions sélectionnées pertinentes stockées dans ledit index sont codées sous forme de texte, lesdits moyens d'entrée incluant en outre des moyens pour coder ladite séquence d'intervalles mélodiques sous forme de chaîne de texte, lesdits moyens de comparaison comprenant un moteur de recherche de texte.

19. Appareil selon la revendication 16, dans lequel l'emplacement, dans lesdits fichiers musicaux lisibles par ordinateur, desdites portions sélectionnées pertinentes desdits fichiers musicaux est indiqué par une ou plusieurs balises, lesdits moyens de comparaison étant adaptés pour localiser lesdites balises.

20. Procédé pour effectuer une recherche dans une base de données de fichiers musicaux, comprenant les étapes consistant à :
fournir comme entrée des critères de recherche comprenant un air sous forme de séquence d'intervalles mélodiques en déterminant une gamme majeure, mineure ou autre la plus proche à laquelle des tons musicaux successifs s'accorderont (20) ;
comparer ladite séquence d'intervalles mélodiques avec des portions sélectionnées d'une pluralité de fichiers musicaux lisibles par ordinateur (29) ; et
fournir comme sortie une liste de concordances possibles desdits critères de recherche avec des éléments de ladite pluralité de fichiers musicaux lisibles par ordinateur (33).

21. Produit de programme informatique, comprenant un support lisible par ordinateur sur lequel se trouve des moyens de code de programme informatique adaptés, lorsque ledit programme est chargé sur un ordinateur, pour amener l'ordinateur à exécuter la procédure de la revendication 20.

22. Appareil selon la revendication 1, dans lequel lesdits moyens de comparaison (15) incluent des moyens pour comparer une pluralité de segments dudit air avec une pluralité de segments provenant de ladite pluralité de fichiers musicaux lisibles par ordinateur, des moyens pour déterminer un nombre de concordances de chaque type de segment, et dans lequel lesdits moyens de sortie basent la probabilité d'une concordance sur une comparaison du profil du nombre de chaque type de segment pour ledit air et pour lesdits fichiers musicaux.

23. Appareil selon la revendication 10, dans lequel les moyens pour mesurer un degré de concordance incluent des moyens pour déterminer un nombre de fonctions de transformation requises pour faire concorder les représentations a) et b).

24. Appareil selon la revendication 1, dans lequel lesdits fichiers musicaux lisibles par ordinateur et/ou lesdits critères de recherche d'entrée comprennent des fichiers audio.

25. Appareil selon la revendication 24, dans lequel lesdits moyens de comparaison (15) incluent en outre des moyens pour identifier les portions sélectionnées pertinentes desdits fichiers audio susceptibles de contenir des airs en détectant une composante du signal audio qui est commune aux canaux à la fois gauche et droit d'une paire stéréo de canaux.
